Europäisches Patentamt

European Patent Office

Office européen des brevets

(11) Veröffentlichungsnummer: **0 371 148 B1**

(12) **EUROPÄISCHE PATENTSCHRIFT**

(45) Veröffentlichungstag der Patentschrift: **30.12.92**

(21) Anmeldenummer: **88118613.4**

(22) Anmeldetag: **09.11.88**

(51) Int. Cl.⁵: **B23K 11/00**, F28F 1/22

(54) Deckenstrahlplatte sowie Verfahren und Vorrichtung zu ihrer Herstellung.

(43) Veröffentlichungstag der Anmeldung:
**06.06.90 Patentblatt 90/23**

(45) Bekanntmachung des Hinweises auf die
Patenterteilung:
**30.12.92 Patentblatt 92/53**

(84) Benannte Vertragsstaaten:
**AT BE CH DE FR GB IT LI NL**

(56) Entgegenhaltungen:
**DE-C- 657 169**
**DE-U- 8 811 570**
**GB-A- 820 807**
**US-A- 4 158 908**

**PATENT ABSTRACTS OF JAPAN vol. 10, no.
277 (M-519)(2333) 19 September 1989, & JP-
A-61 99588 (MITSUBISHI HEAVY IND LTD) 17
Mai 1986**

(73) Patentinhaber: **Zehnder-Beutler GmbH
Almweg 34
W-7630 Lahr 12(DE)**

(72) Erfinder: **Kriese, Peter
Flugplatzstrasse 29
W-7630 Lahr 12(DE)**

(74) Vertreter: **Patentanwälte Dipl.-Ing. Alex Stenger Dipl.-Ing. Wolfram Watzke Dipl.-Ing.
Heinz J. Ring
Kaiser-Friedrich-Ring 70
W-4000 Düsseldorf 11(DE)**

## Beschreibung

Die Erfindung betrifft ein Verfahren und eine Vorrichtung zur Herstellung von Deckenstrahlplatten, die jeweils aus einer Mehrzahl von im Abstand parallel zueinander verlaufenden Rohren zur Beschickung mit einen wärmeabgebenden Heizmedium und einem Strahlplattenblech zur Abgabe der von den Rohren aufgenommenen Wärme mittels Wärmestrahlung bestehen, das mit im Querschnitt halbkreisförmigen, dem Außendurchmesser der Rohre entsprechenden Ausformungen versehen ist, in die jeweils ein Rohr eingelegt wird, das mit dem Strahlplattenblech durch über seine gesamte Länge verlaufende Schweißnähte verschweißt wird, wobei zwei Schweißnähte im Bereich jeder halbkreisförmigen Ausformung des Strahlplattenbleches verlaufen.

Deckenstrahlplatten sind Heizkörper, die insbesondere für die energiesparende Beheizung von Großräumen geeignet sind. Sie werden auf einfache und kostengünstige Weise an der Decke des zu beheizenden Raumes montiert und haben außer verhältnismäßig niedrigen Investitionskosten den Vorteil günstiger Betriebs- und Folgekosten. Wegen ihres großen Strahlungsanteils ergeben sie eine komfortable Beheizung insbesondere von Großräumen, da ihre Wärmestrahlung erst beim Auftreffen auf einen Körper, beispielsweise den Boden, eine Wand oder auf im Raum befindliche Personen in Wärme-Energie umgesetzt wird. Eine Beheizung durch Deckenstrahlplatten bewirkt demgemäß im Aufenthaltsbereich eine gleichmäßige Wärmeverteilung ohne Luftbewegung, ohne Staubaufwirbelung und ohne Geräusche.

Derartige Deckenstrahlplatten sind aus EP-A-360 097 die unter Art. 54(3)EPÜ fällt) und DE-U-88 11 570 bekannt. Sie bestehen jeweils aus einer Mehrzahl von im Abstand parallel zueinandar verlaufenden Rohren zur Beschickung mit einem wärmeabgebenden Heizmedium und einem Strahlplattenblech zur Abgabe der von den Rohren aufgenommenen Wärme mittels Wärmestrahlung. Das Strahlplattenblech ist entsprechend der Anzahl der verwendeten Rohre mit im Querschnitt halbkreisförmigen, dem Außendurchmesser der Rohre entsprechenden Ausformungen versehen, in die jeweils ein Rohr eingelegt ist, das mit dem Strahlplattenblech durch über seine gesamte Länge verlaufende Schweißnähte verschweißt wird, wobei zwei Schweißnähte im Bereich jeder halbkreisförmigen Ausformung des Strahlplattenbleches verlaufen.

Ausgehend von dem bekannten Stand der Technik liegt der Erfindung die Aufgabe zugrunde, ein Verfahren und eine Vorrichtung zur Herstellung von Deckenstrahlplatten zu schaffen, bei denen eine spaltfreie Anlage der Ausformungen des Strahlplattenbleches an der Oberfläche der Rohre erzielt wird, so daß sich der effektive Wirkungsgrad der Deckenstrahlplatten erhöht.

Das erfindungsgemäße Verfahren zur Lösung dieser Aufgabenstellung ist dadurch gekennzeichnet, daß jedes Rohr mit dem Strahlplattenblech durch Widerstandsschweißung mittels einzelne Schweißpunkte erzeugenden Elektroden verschweißt wird, von denen zwei Elektroden derart an gegenüberliegenden Seiten der Ausformung angreifen, daß die im Querschnitt halbkreisförmige Ausformung vor und während des Schweißvorganges zur Erzielung einer spaltfreien Anlage an der Rohroberfläche an des Rohr angepreßt wird.

Da bei diesem erfindungsgemäßen Verfahren die Ausformung durch mindestens zwei im Abstand voneinander angreifende Elektroden vor und während des Schweißvorganges derart an die Rohroberfläche angepreßt wird, daß sich die Innenseite der Ausformung spaltfrei an die Rohroberfläche anlegt, wird das Entstehen von Luftspalten zwischen Rohroberfläche und Ausformung vermieden. Der Wärmeübergang zwischen diesen beiden Teilen wird auf diese Weise erheblich verbessert, zumal außer der innigen Umschlingung des Rohres durch das Strahlplattenblech der weitere Vorteil erzielt wird, daß eine große Zahl von Schweißpunkten geschaffen wird. Mit dem erfindungsgemäßen Verfahren wird somit nicht nur der Wärmeübergang vom Rohr zum Strahlplattenblech verbessert, sondern auch die Steifigkeit der Deckenstrahlplatte erhöht. Der Stromfluß kann hierbei zwischen einer oberen Elektrode, die mittig an der freien Rohroberfläche anliegt, und den beiden unteren Elektroden oder ausschiießlich zwischen den beiden an der Ausformung angreifenden Elektroden verlaufen.

Die Schweißpunkte des erfindungsgemäßen Verfahrens können entweder durch Widerstandsschweißung noch dem Punktschweißen oder nach dem unterbrochenen Rollnahtschweißen erzeugt werden.

Die erfindungsgemäße Vorrichtung zur Herstellung von Deckenstrahlplatten ist dadurch gekennzeichnet, daß außer einer oberen, an der Oberseite des Rohres angreifenden Elektrode eine als Mehrfachelektrode mit mindestens zwei, seitlich an der Ausformung des Strahlplattenbleches angreifenden Kontaktflächen ausgebildete untere Elektrode vorgesehen ist.

Hierdurch wird beim Einsatz der erfindungsgemäßen Vorrichtung sichergestellt, daß die im Querschnitt halbkreisförmigen Ausformungen des Strahlplattenbleches bei ihrer Verschweißung mit den eingelegten Rohren stets zuverlässig an der Rohroberfläche anliegen, bevor sie mit dem Rohr verschweißt werden, so daß aufgrund des Wegfalls von bisher möglichen Luftspalten und wegen der großflächigen Anlage eine zuverlässige Wärmeübertragung von den Rohren auf das Strahlplattenblech erzielt wird. Praktische Versuche haben ergeben, daß die auf der erfindungsgemäßen Vorrichtung hergestellten Deckenstrahlplatten eine mindestens 10 % höhere Oberflächentemperatur erreichen. Trotz geringem Aufwand hinsichtlich der erfindungsgemäßen Vorrichtung wird somit eine erhebliche Steigerung des Wirkungsgrades erzielt.

Die bei der erfindungsgemäßen Vorrichtung verwendete Mehrfachelektrode kann entweder als rechtwinklig zur Rohrlängsachse beweglicher Grundkörper ausgebildet werden, der mit vorzugsweise zwei auswechselbaren Kontaktstücken versehen ist, oder durch mindestens zwei scheibenförmige, an das Strahlplattenblech anstellbare Rollen gebildet werden. In beiden Fällen ergibt sich eine zuverlässige Konstruktion, die auch bei längerem Einsatz eine gleichbleibende Qualität der Widerstandsschweißung sichert.

Auf der Zeichnung sind ein Ausführungsbeispiel einer nach dem erfindungsgemäßen Verfahren hergestellten Deckenstrahlplatte sowie zwei Ausführungsbeispiele eines Teils einer Vorrichtung zu deren Herstellung dargestellt, und zwar zeigen:

Fig. 1  eine perspektivische Ansicht einer Deckenstrahlplatte,

Fig. 2  eine Teilansicht dieser Deckenstrahlplatte von unten,

Fig. 3  einen Querschnitt durch einen Teil einer Deckenstrahlplatte während der Herstellung zusammen mit einer ersten Ausführungsform einer erfindungsgemäßen Mehrfachelektrode und

Fig. 4  eine der Fig.3 entsprechende Darstellung einer zweiten Ausführungsform der Mehrfachelektrode.

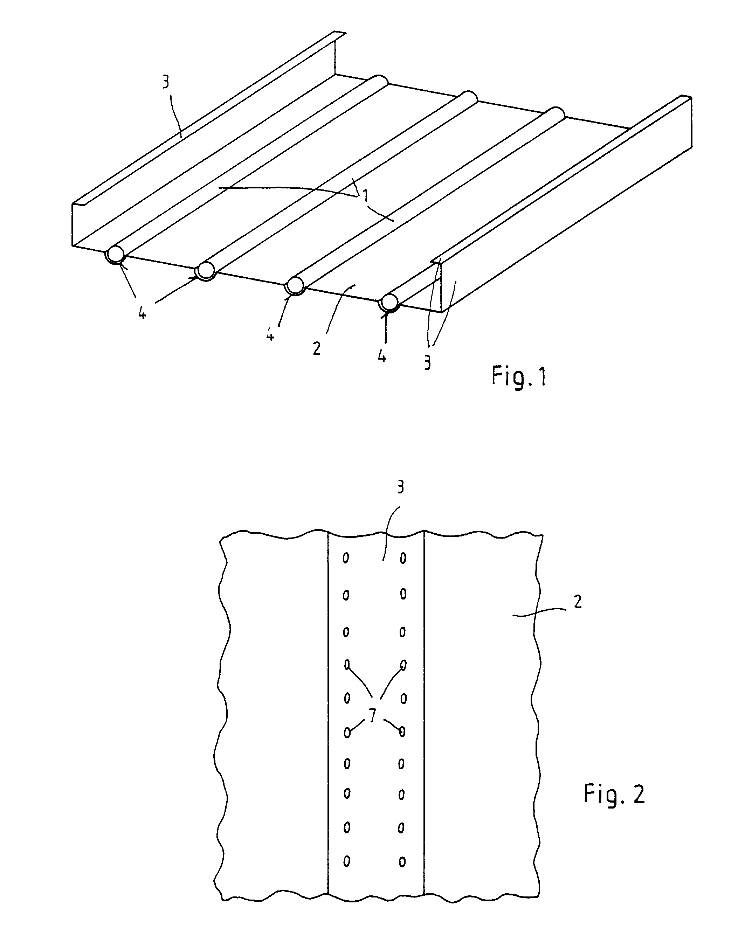

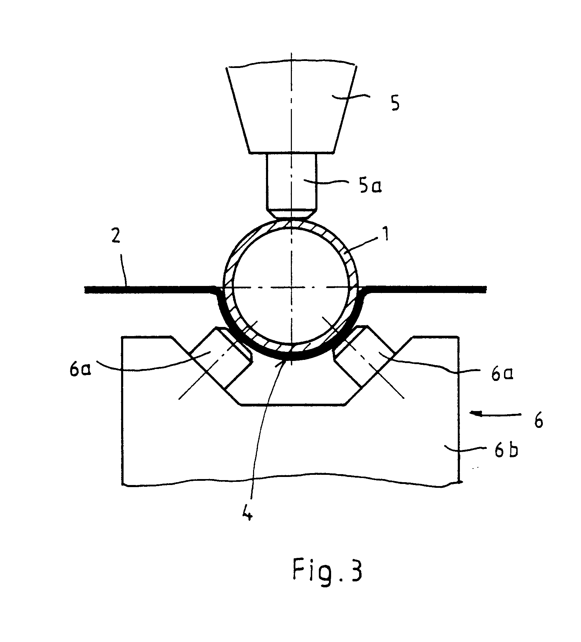

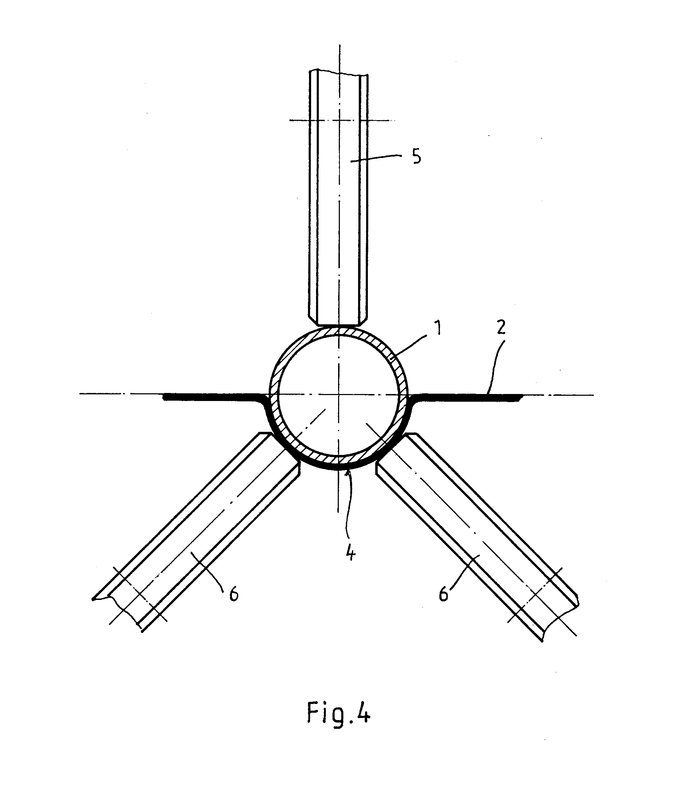

Die perspektivisch in Fig.1 dargestellte Deckenstrahlplatte besteht beim Ausführungsbeispiel aus vier im Querschnitt kreisförmigen Rohren 1 und einem Strahlplattenblech 2, das an seinen parallel zu den Rohren 1 verlaufenden Rändern mit doppelten Abwinklungen 3 versehen ist. Zur Aufnahme jedes Rohres 1 ist das zwischen den Abwinklungen 3 ebene Strahlplattenblech 2 mit Ausformungen 4 versehen, die im Querschnitt halbkreisförmig ausgebildet sind, und zwar mit einem dem Außendurchmesser der Rohre 1 entsprechenden Innendurchmesser. Hierdurch liegen die Rohre 1 mit der unteren Hälfte ihrer Rohroberfläche vollflächig an der Innenfläche der Ausformungen 4 an, wie insbesondere aus den Figuren 3 und 4 hervorgeht.

Die Durchmesser und Langen der Rohre 1 und ihr Abstand voneinander können unterschiedlich ausgeführt sein. Bei einer bevorzugten Ausführungsform werden Stahlrohre verwendet, die einen Außendurchmesser von bis zu 40 mm haben. Das Strahlplattenblech ist bei einer bevorzugten Ausführungsform 1,25 mm dick; seine Breite beträgt bis zu etwa 2,0 m, seine Länge normalerweise bis zu 7,5 m. Die Ausformungen 4 werden hergestellt, bevor die Rohre 1 mit dem Strahlplattenblech 2 verschweißt werden.

Dieses Verschweißen erfolgt auf einer Vorrichtung, die mit mindestens einer Schweißvorrichtung ausgestattet ist, von der zwei Ausführungsbeispiele in den Figuren 3 und 4 dargestellt sind.

In beiden Figuren ist ein Teil des Strahlplattenbleches 2 mit einer Ausformung 4 zu erkennen, in die ein Rohr 1 eingelegt ist. Auf die freie Oberfläche dieses Rohres 1 ist eine obere Elektrode 5 aufgesetzt, die beim Ausführungsbeispiel nach Fig. 3 mit einem auswechselbaren Kontaktstück 5a versehen ist. An der das Rohr 1 aufnehmenden Ausformung 4 greifen beim Ausführungsbeispiel nach Fig.3 von unten zwei Kontaktstücke 6a einer unteren Elektrode 6 an, die beim Ausführungsbeispiel in eines Grundkörper 6b angeordnet sind, der rechtwinklig zur Längsachse des Rohres 1 beweglich ist. Wie aus Fig.3 hervorgeht, liegen die Kontaktstücke 6a der unteren Elektrode 6 an gegenüberliegenden Seiten der Ausformung 4 an.

Durch die in Fig.3 dargestellte Ausbildung der unteren Elektrode 6 mit zwei an gegenüberliegenden Seiten der Ausformung 4 angreifenden Kontaktstücken 6a wird die im Querschnitt halbkreisförmige Ausformung 4 des Strahlplattenbleches 2 spaltfrei und großflächig an die untere Hälfte der Rohroberfläche angepreßt, wenn die beiden Elektroden 5 und 6 relativ zum Rohr 1 bzw. Strahlplattenblech 2 angestellt werden. Auf diese Weise wird vor und während dar Widerstandsschweißung mit Hilfe der beiden Elektroden 5 und 6 sichergestellt, daß kein Luftspalt zwischen der Rohroberfläche 1 und der Innenfläche der Ausformung 4 entsteht.

Die Fig.2 zeigt eine Teilansicht eines Strahlplattenbleches 2 von unten. Im Bereich der Ausformung 4 sind zwei Reihen von im Abstand voneinander liegenden Schweißpunkten 7 zu erkennen, die beispielsweise mit den Elektroden 5 und 6 hergestellt worden sind.

Eine entsprechende Ausführung ergibt sich, wenn anstelle der in Fig.3 dargestellten Elektroden 5 und 6 rollenförmige Elektroden gemäß Fig.4 verwendet werden. Dabei sind die obere und die unteren Elektroden als Scheiben ausgeführt, die mit einer Mehrzahl von im Abstand angeordneten Kontakterhebungen versehen sein können, wenn anstelle einer durchgehenden Schweißnaht eine Reihe von Schweißpunkten erzeugt werden soll. Die unteren Elektroden 6 liegen in der Nähe des Überganges von der im Querschnitt halbkreisförmigen Ausformung 4 in den ebenen Teil des Strahlplattenbleches 2 an der Außenseite der Ausformung 4 an, so daß des Material dieser Ausformung 4 auf dem gesamten Umschlingungswinkel glattflächig an das Rohr 1 angepreßt wird.

Während mit der Ausführungsform nach Fig.3 eine Widerstandsschweißung nach dem Punktschweißverfahren erfolgt, wird mit der Ausführungsform nach Fig.4 eine Widerstandsschweißung noch dem Rollnahtschweißverfahren ausgeführt, das bei dar Verwendung von mit Kontakterhebungen versehenen Elektroden 6 ebenfalls zwei Reihen von Schweißpunkten 7 ergibt.

Nach Beendigung der Schweißvorgänge wird die in Fig.1. dargestellte Deckenstrahlplatte mit auf der Zeichnung nicht dargestellten Stahlprofilen zur Aufhängung an der Decke sowie mit als Sammler dienenden Kopfstücken versehen, die die Zu- und Abfuhr des Heizmediums bewirken. Auf die Oberseite der Deckenstrahlplatte wird schließlich eine vorzugsweise mit einer Aluminiumfolie beschichtete Isoliermatte aufgebracht, um eine Wärmestrahlung an die Decke zu unterbinden. Diese Isoliermatte ist dar besseren Übersicht wegen in Fig.1 weggelassen worden.

**Bezugszeichenliste:**

| | |
|---|---|
| 1 | Rohr |
| 2 | Strahlplattenblech |
| 3 | Abwinklung |
| 4 | Ausformung |
| 5 | obere Elektrode |
| 5a | Kontaktstück |
| 6 | untere Elektrode |
| 6a | Kontaktstück |
| 6b | Grundkörper |
| 7 | Schweißpunkt |

**Patentansprüche**

1. Verfahren zur Herstellung von Deckenstrahlplatten, die jeweils aus einer Mehrzahl von in Abstand parallel zueinander verlaufenden Rohren (1) zur Beschickung mit einem wärmeabgebenden Heizmedium und einem Strahlplattenblech (2) zur Abgabe der von den Rohren (1) aufgenommenen Wärme mittels Wärmestrahlung bestehen, das mit im Querschnitt halbskreisförmigen, dem Außendurchmesser der Rohre (1) entsprechenden Ausformungen (4) versehen ist, in die jeweils ein Rohr (1) eingelegt wird, das mit dem Strahlplattenblech (2) durch über seine gesamte Länge verlaufende Schweißnähte verschweißt wird, wobei zwei Schweißnähte im Bereich jeder halbkreisförmigen Ausformung (4) des Strahlplattenbleches (2) verlaufen,
**dadurch gekennzeichnet,**
daß jedes Rohr (1) mit dem Strahlplattenblech (2) durch Widerstandsschweißung mittels einzelne Schweißpunkte (7) erzeugenden Elektroden (5,6) verschweißt wird, von denen zwei Elektroden (6) derart an gegenüberliegenden Seiten der Ausformung (4) angreifen, daß die im Querschnitt halbkreisförmige Ausformung (4) vor und während des Schweißvorganges zur Erzielung einer spaltfreien Anlage an der Rohroberfläche an das Rohr (1) angepreßt wird.

2. Verfahren nach Anspruch 1, dadurch gekennzeichnet, daß die Schweißpunkte (7) durch Widerstandsschweißung nach dem Punktschweißverfahren erzeugt werden.

3. Verfahren nach Anspruch 1, dadurch gekennzeichnet, daß die Schweißpunkte (7) durch Widerstandsschweißung nach dem unterbrochenen Rollnahtschweißverfahren erzeugt werden.

4. Vorrichtung zur Herstellung von Deckenstrahlplatten, die jeweils aus einer Mehrzahl von im Abstand parallel zueinander verlaufenden Rohren (1) zur Beschickung mit einem wärmeabgebenden Heizmedium und einem Strahlplattenblech (2) zur Abgabe der von den Rohren (1) aufgenommenen Wärme mittels Wärmestrahlung bestehen, das mit im Querschnitt halbkreisförmigen, dem Außendurchmesser der Rohre (1) entsprechenden Ausformungen (4) versehen ist, in die jeweils ein Rohr (1) eingelegt ist, das mit dem Strahlplattenblech (2) durch über seine gesamte Länge verlaufende Schweißnähte verschweißt wird, wobei zwei Schweißnähte im Bereich jeder halbkreisförmigen Ausformung (4) des Strahlplattenbleches (2) verlaufen,
**dadurch gekennzeichnet,**
daß außer einer oberen, an der Oberseite des Rohres (1) angreifenden Elektrode (5) eine als Mehrfachelektrode mit mindestens zwei, seitlich an der Ausformung (4) des Strahlplattenbleches (2) angreifenden Kontaktflächen (6a) ausgebildete untere Elektrode (6) vorgesehen ist.

5. Vorrichtung nach Anspruch 4, dadurch gekennzeichnet, daß die Mehrfachelektrode als rechtwinklig zur Rohrlängsachse beweglicher Grundkörper (6b) ausgebildet ist, der mit zwei vorzugsweise auswechselbaren Kontaktstücken (6a) versehen ist.

6. Vorrichtung nach Anspruch 4, dadurch gekennzeichnet, daß die Mehrfachelektrode durch zwei scheibenförmige, an das Strahlplattenblech (2) anstellbare Rollen (6) gebildet ist.

**Claims**

1. Method for making radiant ceiling panels which in each case consist of a plurality of pipes (1) extending parallel to one another at a distance for charging with a heat-emitting heating medium and of a radiant sheet-metal panel (2) for emission, by means of heat radiation, of the heat absorbed from the pipes (1), which panel is provided with cross-sectionally semi-circular shapings (4) which correspond to the outside diameter of the pipes (1) and into which in each case a pipe (1), which is welded to the radiant sheet-metal panel (2) by weld seams extending over its entire length, is inserted, two weld seams extending in the region of each semi-circular shaping (4) of the radiant sheet-metal panel (2), characterised in that each pipe (1) is welded to the radiant sheet-metal panel (2) by resistance welding by means of electrodes (5, 6) which produce individual welding spots (7) and two electrodes (6) of which act on opposite sides of the shaping (4) in such a manner that the cross-sectionally semi-circular shaping (4) is, before and during the welding process, pressed against the pipe (1) to achieve a gap-free contact with the pipe surface.

2. Method according to Claim 1, characterised in that the welding spots (7) are produced by resistance welding according to the spot-welding method.

3. Method according to Claim 1, characterised in that the welding spots (7) are produced by resistance welding according to the interrupted rolled-seam welding method.

4. Device for making radiant ceiling panels which in each case consist of a plurality of pipes (1) extending parallel to one another at a distance for charging with a heat-emitting heating medium and of a radiant sheet-metal panel (2) for emission, by means of heat radiation, of the heat absorbed from the pipes (1), which panel is provided with cross-sectionally semi-circular shapings (4) which correspond to the outside diameter of the pipes (1) and into which in each case a pipe (1), which is welded to the radiant sheet-metal panel (2) by weld seams extending over its entire length, is inserted, two weld seams extending in the region of each semi-circular shaping (4) of the radiant sheet-metal panel (2), characterised in that, in addition to an upper electrode (5) acting on the upper side of the pipe (1), a lower electrode (6) is provided, which is designed as a multiple electrode with at least two contact surfaces (6a) acting laterally on the shaping (4) of the radiant sheet-metal panel (2).

5. Device according to Claim 4, characterised in that the multiple electrode is designed as a basic body (6b) which is movable at right angles to the longitudinal axis of the pipe and is provided with two preferably exchangeable contact pieces (6a).

6. Device according to Claim 4, characterised in that the multiple electrode is formed by two disc-shaped rollers (6) which can be placed against the radiant sheet-metal panel (2).

**Revendications**

1. Procédé de fabrication de plaques rayonnantes de plafond qui sont constituées chacune de plusieurs tubes (1) s'étendant à distance les uns des autres, parallèlement entre-eux, et destinés à être alimentés par un fluide de chauffage délivrant de la chaleur, et d'une tôle de plaque rayonnante (2) pour délivrer par rayonnement la chaleur emmagasinée par les tubes (1), la plaque étant pourvue de moulures (4) façonnées dans la tôle, de section droite de forme demi-circulaire correspondant au diamètre extérieur des tubes (1), dans chacune desquelles est disposé un tube (1) qui est soudé à la tôle de plaque rayonnante (2) par des joints soudés s'étendant sur toute sa longueur, deux joints soudés s'étendant dans la zone de chaque moulure (4) façonnée dans la plaque rayonnante en tôle (2), caractérisé en ce que chaque tube (1) est soudé sur la tôle de plaque rayonnante (2) par soudage par résistance, au moyen d'électrodes (5, 6) produisant des points de soudage (7) individuels, et dont deux électrodes (6) agissent sur des côtés opposés de la moulure façonnée (4) de manière à ce que la moulure façonnée (4), de section droite demi-circulaire, soit appliquée sous pression contre le tube (1), avant et pendant l'opération de soudage, en vue d'obtenir une application sans interstice résiduel, sur la surface extérieure du tube.

2. Procédé selon la revendication 1, caractérisé en ce que les points de soudage (7) sont réalisés par soudage par résistance, selon le principe du soudage par points.

3. Procédé selon revendication 1, caractérisé en ce que les points de soudage (7) sont réalisés par soudage par résistance, selon le principe du soudage par molettes interrompu.

**4.** Dispositif pour la fabrication de plaques rayonnantes de plafond qui sont constituées chacune de plusieurs tubes (1) s'étendant à distance les uns des autres, parallèlement entre-eux, et destinés à être alimentés par un fluide de chauffage délivrant de la chaleur, et d'une tôle de plaque rayonnante (2) pour délivrer par rayonnement la chaleur emmagasinée par les tubes (1), la plaque étant pourvue de moulures (4) façonnées dans la tôle, de section droite de forme demi-circulaire correspondant au diamètre extérieur des tubes (1), dans chacune desquelles est disposé un tube (1) qui est soudé à la tôle de plaque rayonnante (2) par des joints soudés s'étendant sur toute sa longueur, deux joints soudés s'étendant dans la zone de chaque moulure (4) façonnée dans la plaque rayonnante en tôle (2), caractérisé en ce qu'en-dehors d'une électrode supérieure (5) agissant sur le côté supérieur du tube (1), est prévue une électrode inférieure (6) réalisée sous la forme d'électrode multiple comportant au moins deux surfaces de contact (6a) agissant latéralement sur la moulure façonnée (4) de la tôle de plaque rayonnante (2).

**5.** Dispositif selon la revendication 4, caractérisé en ce que l'électrode multiple est réalisée sous la forme d'un corps de base (6b) qui est déplaçable perpendiculairement à l'axe longitudinal du tube, et qui est pourvu de deux pièces de contact (6a) de préférence interchangeables.

**6.** Dispositif selon la revendication 4, caractérisé en ce que l'électrode multiple est formée par deux molettes (6) en forme de disque, qui peuvent être appliquées contre la tôle de plaque rayonnante (2).

Fig. 1

Fig. 2

Fig.3

Fig.4